# EUROPEAN PATENT SPECIFICATION

(11) **EP 3 290 533 B1**
(45) Date of publication and mention of the grant of the patent: **15.11.2023**
(21) Application number: 17183886.5
(22) Date of filing: 04.02.2011
(51) Int. Cl.: C21D 8/04, B23K 11/11, B23K 11/34, C21D 1/09, C21D 9/00, C21D 9/50, C21D 1/673, B23K 103/04, B23K 101/00

(54) **STRUCTURAL COMPONENT OF A VEHICLE AND MANUFACTURING METHOD**
STRUKTURELLE KOMPONENTE EINES FAHRZEUGS UND HERSTELLUNGSVERFAHREN
COMPOSANT STRUCTUREL D'UN VÉHICULE ET PROCÉDÉ DE FABRICATION

(30) Priority: 19.04.2010 ES 201030563
(43) Date of publication of application: 07.03.2018
(62) Divisional of application: 11716971.4
(73) Proprietor: AUTOTECH ENGINEERING S.L., 48340 Amorebieta-Etxano (ES)
(72) Inventor: Garcia, Michel, 08800 SITGES (ES); Vila Ferrer, Elisenda, 08904 Hospitalet de Llobregat (ES); Perarnau Ramos, Francesc, 08201 Sabadell (ES)
(74) Representative: de Rooij, Mathieu Julien

(56) References cited:
- EP-A2- 2 371 974
- DE-A1-102004 023 579
- US-A1- 2004 003 874
- XP055502308
- Mäntyjärvi K ET AL: "Local Laser heat Treatments in making tailored strength steel constructions", NOLAMP 11, 11th Nordic conference in Laser Processing of materials, vol. 273, 20 August 2007 (2007-08-20), - 22 August 2007 (2007-08-22), pages 315-322, XP055502357, ISBN: 978-952-214-412-6

## Description

### Technical Field of the Invention

The invention relates to a structural component of a vehicle obtained from a high strength or ultra-high strength steel plate with a silicon and aluminium-based coating intended to form part of a complex structure, such as the structure of an automotive vehicle. The structural component of the invention can be, by way of example, any one of the following open list: a window reinforcement, a bumper beam, an aperture upright reinforcement, a central pillar reinforcement or a door reinforcement.

Said component is formed by at least one first part which has been subjected during the process for obtaining it to a specific treatment to change its microstructure in a localized and previously selected zone

### Background of the invention

In the automotive field, the use of hot stamping method for forming structural components of the vehicle is widespread. A homogenous change in the microstructure of the starting metal material and forming the desired finished piece are achieved simultaneously during this method.

Thus, the microstructure of 22MnB5 steel plates of a thickness between 0.8 and 2.5 mm, for example, frequently used in the automotive field due to their mechanical performance after stamping, is typically converted in two steps from ferrite-perlite to austenite by means of a specific heat treatment followed by a martensitic phase transformation during cooling in the stamping presses.

For the purpose of obtaining pieces with localized zones having different hardness and ductility, variants of the typical methods by means of which localized zones of the parts obtained do not show a pure martensitic microstructure, causing the finished piece to be slightly more ductile than the parts obtained following the typical method, have recently been disclosed.

This is achieved by reducing the cooling rate, only in those selected zones, to a ratio under the required rate of 27 K/s, which is essential for reaching a pure martensitic microstructure.

To put these variants of the typical methods into practice, the patent documents DE 102005032113 and EP 1715066 propose the use of presses the pressing plates or bodies of which are provided in localized zones with heating means to heat the desired zones of the piece during the manufacture, as well as with insulating means so that the heat energy transmitted to said zones is controlled and localized. DE 102004 023579 A1 discloses a process for heat treatment of a stainless steel joint part involving heat treatment of a partial region of the part with resultant softening of the steel useful in automobile construction, especially for strengthening of automobile bodies.

An objective of the present invention is an alternative method for achieving the same result, as well as a structural component of a vehicle that can be obtained by means of the method of the invention.

Another objective of the present invention is a method that does not require changing tools for the hot stamping operation to be put into practice. In other words, it does not require replacing the presses which have been used until now with presses with sectors demarcated by insulating elements and that incorporate heating means.

According to another aspect of the invention, it is desirably for the alternative method to be of application for obtaining structural components obtained from a USIBOR^{®} 1500 P steel plate.

Generally, the structural components of a vehicle are usually formed in turn by the connection of two or more parts resulting from hot stamping formation of a steel plate with a silicon and aluminium-based coating, of a thickness comprised between 1 and 3 mm. The connection of said parts can be done by arc, laser, resistance welding, etc.

Spot welding, in particular, which is a resistance welding method, is a very well known technique applied in the automotive industry. Nevertheless, the occurrence of problems in welds of this type due to the occurrence of new high strength (HSS) or of ultra-high strength (UHSS) steels used to manufacture parts which form the structural components of a vehicle when connected, has recently been detected. It has specifically been found that when two parts of high or ultra-high strength steels are connected by means of a spot weld, the hardness drastically decreases in the heat affected zone due to the weld. Due to the large difference between the hardnesses of the rest of the parts and the weld with the heat affected zone due to the weld, the stresses are concentrated precisely in said zone and the breakage of the structural component begins right in the heat affected zone. In contrast, the difference of hardnesses between the heat affected zone and the rest of the part in normal steel is not that large, so the breakage starts at a point of the base material of the part.

Different methods, such as applying frequency during the spot welding process, for example, have been tested to solve this problem, but not altogether satisfactory results have been achieved.

Therefore, another objective of the present invention consists of how to obtain a structural component of a vehicle which does not suffer this problem in the case of being formed by the connection of two parts connected by spot welding.

### Disclosure of the invention

For the purpose of providing a solution to the problems raised, a method for the manufacture of a part of a structural component of a vehicle, such as an automotive vehicle, intended to be connected by spot welding to at least a second part, is disclosed. The scope of the invention is defined in the appended claims.

The method according to the invention comprises the operation of subjecting an ultra-high strength steel plate or sheet with a protective coating and of a thickness comprised between 1 and 3 mm, to a prior hot stamping formation operation. The protective coating is silicon and aluminium-based which protects the plate from the effects of corrosion, decarburization, oxidation during heat treatments to which the plate can be subjected, etc.

The method is essentially characterized in that it comprises the subsequent operation of subjecting at least one localized and previously selected zone of said first part to a subsequent heat treatment, irradiating it with a diode laser beam of a power comprised between 500 W and 6 kW until reaching a temperature comprised between 400 °C and 900 °C, then leaving the first part to cool in order to change its microstructure, providing said localized zone with an intentionally lower martensite content and accordingly with a lower yield strength and greater elongation in comparison with those of its adjacent zones not subjected to said heat treatment.

According to another feature of the invention, after being subjected to the subsequent heat treatment in the localized zone, the first part is left to cool at room temperature or is subjected to a controlled cooling operation in which the cooling rate is equal to or less than 10 °C/s.

According to another feature of the invention, the subsequent heat treatment in the localized zone is done by marking out a predetermined figure thereon by means of a diode laser beam with an optic having a parallelepiped cross-section, the rate of advance of the laser beam being from 4 to 20 mm/s.

In a preferred variant, the method comprises the operation of irradiating one and the same zone, or at least part of it, more than once with the diode laser beam.

According to another feature of the method, the localized zone is provided with a microstructure mostly or entirely made up of ferrite, perlite, tempered martensite or a mixture of any of the foregoing by means of said radiation and subsequent cooling.

Disclosed is also a method for the manufacture of a structural component of a vehicle, which is characterized in that the first step consists of the manufacture of a first part according to the previously described method, followed by a step of connecting a second part to said first part by spot welding in the localized zone of the first part, i.e., the zone that has been heat treated by means of the diode laser beam, is disclosed.

The application of the diode laser in the localized zone of the first part followed by the cooling process causes the mentioned change of the microstructure of the localized zone, decreasing its martensite content in the localized zone, and therefore, decreasing its yield strength and increasing its elongation, in comparison with the rest of the part, which makes said localized zone an energy absorption zone in the event of a collision. In addition to these effects, the heat treatment applied in the localized zone, which is the zone by which the first part will subsequently be connected to the second part by means of spot welding, causes the prior decrease of the hardness in said zone, such that once the spot welding has been performed, the difference between the hardness of the part and the weld is not so different from the hardness of the heat affected zone due to the weld, and consequently, the breakage is localized in the base material of the part, not in the heat affected zone.

According to the invention, there is disclosed a structural component of a vehicle, formed by a first part obtained from an ultra-high strength (UHSS) steel plate with a protective coating, of a thickness comprised between 1 and 3 mm which, having been subjected to a prior hot stamping formation operation, comprises at least one localized zone, said localized zone having been selectively subjected, after the formation of the first part, to a heat treatment by means of a high power diode laser beam followed by a cooling step to change its microstructure, providing said localized zone with a martensite content intentionally less than that of the rest of the part for the purpose of improving the spot weldability of the first part to a second adjacent part. Advantageously, by reducing the martensite content in the localized zone, the yield strength of said zone is reduced and its elongation increased, which is favorable for energy absorption in the event of a collision.

According to another feature of the claimed component, said component comprises a second part, obtained from a high strength (HSS) or ultra-high strength (UHSS) steel plate hot formed by stamping, connected to the first part by means of spot welding in the localized zone of the first part.

According to another feature of the invention, the structure of said localized zone is ferrite and perlite based, having been eliminated the martensite structure obtained of the hot forming of the first part.

In an embodiment, not claimed, the first part, which forms the or a part of the component, comprises several localized zones, each in the form of specks, stains or strips adjacent to one another and in a number sufficient for modifying the mechanical properties of said localized zones of the plate, such as its tensile strength, when it is integrated in a complex structure, for example the structure of an automotive vehicle.

According to another feature of the invention, the tensile strength of the localized zone or localized zones of the first part of the finished component has a value between 30% and 50% of the tensile strength measured after its hot forming and prior to being subjected to the heat treatment by means of the diode laser beam.

In a variant of interest, the plate from which the finished component is obtained is boron steel plate, and its tensile strength measured after hot forming is comprised between 1200 MPa and 1600 MPa.

According to the invention, the protective coating of the plate is aluminium and silicon coating.

### Brief Description of the Drawings

A structural component in the form of a central reinforcement of an automotive vehicle, another in the form of an upright between the back door and the plate glass, and different variants of a localized zone, selectively irradiated with a laser beam for putting the invention into practice, as well as conducted test results, are illustrated in the attached drawings by way of non-limiting example. Specifically:
Figure 1 is a plan view of a central reinforcement in which a part which has been selectively irradiated with a laser beam according to the invention has been indicated by shading;
Figure 2 is a plan view of another central reinforcement in which four parts which have been selectively irradiated with a laser beam according to the invention have been indicated by shading;
Figure 3 is a schematic view of several forms that the laser beam used to irradiate the localized zones can have;
Figures 4 and 5 show two possible variants for the formation of localized zones irradiated with a laser beam intended for modifying the mechanical properties of the stamped plate, with a wave-shaped distribution and with another distribution based on adjacent square dots forming a zigzag line;
Figures 6 and 7 show in detail two examples of laser irradiation of one of the localized side zones of Figure 2, presenting in both cases a linear distribution of irradiated dots separate from one another, with an oval shape and with a square shape, respectively;
Figure 8 shows a graph in which the hardness of two localized zones of structural components which have been spot welded are compared, with the difference that one of the zones has been selectively irradiated with a diode laser beam for putting the invention into practice before spot welding;
Figure 9 shows two spot welds in respective localized zones of corresponding structural components, of which only the second component comprises a zone which has been selectively irradiated with a diode laser beam for putting the invention into practice before spot welding;
Figure 10 is an elevation view of the part of the body of a vehicle in which the structural component which forms the upright existing between the front door and the plate glass has been marked; and
Figure 11 is a section view according to section C-C of Figure 10 in which a localized zone selectively irradiated with a diode laser beam for putting the invention into practice before spot welding is shown.

### Embodiments

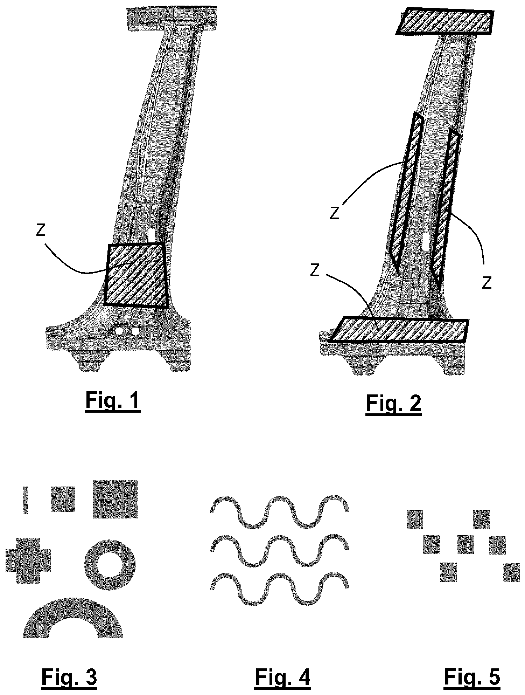

Figure 1 depicts a central reinforcement of an automotive vehicle in which the part which comprises in a localized manner at least one localized zone Z which has been subjected to a second heat treatment to change its microstructure has been indicated in the form of shading for the reader's understanding. Whereas the part of the central reinforcement that is not shaded has not been subjected to any heat treatment after the conventional hot stamping method for forming the component, its original microstructure having been transformed into a martensite microstructure, at least part of the surface of the shaded zone has been subjected, after hot stamping the component, to a second heat treatment irradiating it with a diode laser beam of a power comprised between 500 W and 6 kW until reaching a temperature comprised between 400 °C and 900 °C, the component then having been left to cool in a controlled manner at a rate comprised between 1 °C/s and 10 °C/s, providing said localized zone Z with an intentionally lower martensite content, and accordingly with a lower yield strength and greater elongation, in comparison with those of its adjacent zones not subjected to said heat treatment, not shaded in Figure 1. Unlike Figure 1, in Figure 2 the central reinforcement of an automotive vehicle comprises a total of four localized zones Z which have been subjected to the same treatment described for Figure 1.

The heat treatment applied by means of the diode laser beam followed by the mentioned cooling is an improvement in the performance in the event of collision of the structural components of the vehicles, generally formed by several parts connected by resistance spot welding. It has been found in collision testing that cracks start right at the resistance spot welds. This is due to a decrease of the mechanical properties in the heat affected zone (HAZ) of the resistance spot, specifically of the hardness, which in comparison with the hot stamped plate and the resistance spot itself, it is a much lower value and in a very localized zone.

If instead of resistance spot welding in boron steel with a high or ultra-high strength, said weld is performed in a localized zone Z previously tempered by the action of the diode laser, and therefore, of lower yield strength, the difference between the mechanical properties of the HAZ, the base metal of the stamped plate and the weld spots is fewer. The crack will thereby start somewhere other than the HAZ, specifically in the base metal.

In a first embodiment, the component is formed by a hot stamped part from original USIBOR^{®} 1500 P steel sheet 1.7 mm thick, with a protective silicon and aluminium-based coating, and the shaded part of the component comprises a single localized zone Z of 200 cm² which was subsequently irradiated with a 6 KW power laser beam, at a rate of advance of 8 mm/s, the laser format being of the type which irradiates surfaces based on dots with a variable surface of approximately 1800 mm² and its temperature having been raised until reaching 680 °C. After reaching said temperature, the component was left to cool at room temperature.

Tests conducted with this practical example allowed obtaining a finished component with a tensile strength value of the metal of 740 MPa, which represents a 50% reduction with respect to the tensile strength of a similar component lacking a localized zone Z subjected to a heat treatment after hot stamping the component. With respect to the elongation, an A80 value of 11 % was obtained with the laser treatment, which translates into a 120% elongation increase with respect to the elongation of a similar component lacking localized zone Z subjected to a heat treatment after hot stamping the component.

In a second embodiment, the component was formed by a hot stamped part from original USIBOR^{®} 1500 P steel sheet 1.3 mm thick. The shaded part of the component comprised a single localized zone Z irradiated with a 500 W power laser beam at a rate of advance of 8 mm/s, the irradiated surface being 100 cm² and having a laser format in the form of dots with a surface of approximately 510 mm². The temperature of the laser during irradiation reached 650 °C and the component was then left to cool at room temperature. Tests conducted with this practical example allowed obtaining a finished component with a tensile strength value of the metal of 623 MPa, which represents a 58% reduction with respect to the tensile strength shown by a similar component lacking localized zone Z subjected to a heat treatment after hot stamping the component. With respect to elongation, an A80 value of 6% was achieved with the laser treatment, which translates into a 20% elongation increase with respect to the elongation of a similar component lacking a localized zone Z subjected to a heat treatment after hot stamping the component.

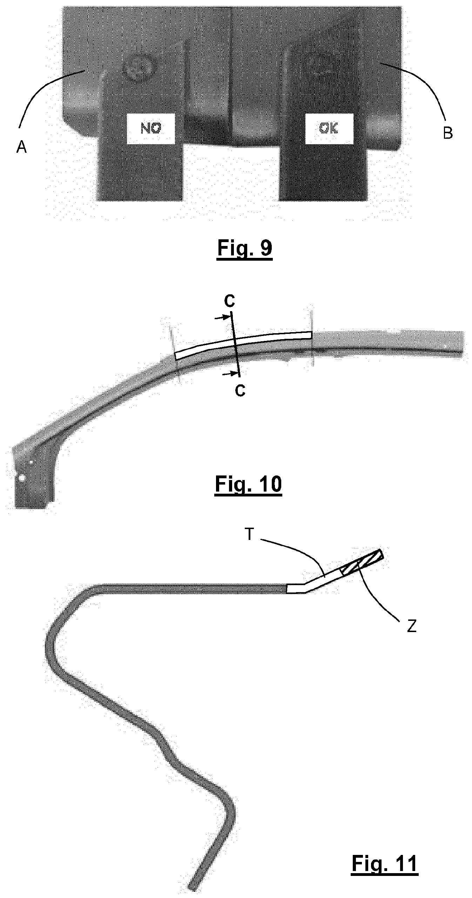

Another structural component of a vehicle where the mentioned treatment can be applied has been pointed out on part of the body of a vehicle in Figure 10, specifically, the component which forms the upright between the front door and the plate glass. As can be seen in Figure 11, corresponding to the section according to section C-C of Figure 10, the localized zone Z has been subjected to the mentioned heat treatment by means of a diode laser beam followed by cooling at room temperature. The zone of transition T between the zone Z and the rest of the structural component which has not been subjected to the heat treatment by means of the diode laser beam has also been indicated in Figure 11.

Tests similar to previous tests performed in other components subjected to the same described method, irradiating a localized zone Z with a diode laser beam of a power comprised between 500 W and 6 kW, reaching a temperature comprised between 650 °C and 680 °C and using a laser format in the form of dots with a surface comprised between 1800 mm² and 510 mm², then leaving the component to cool at room temperature, have allowed obtaining optimal process values in the yield strength reduction and in the elongation increase, specifically, a tensile strength value of the metal of 590 MPa and an A80 value of 11 % in the treated zone of the component.

To perform the tempering by means of the diode laser, an optic which can magnify the laser beam to the suitable size is necessary. Since the energy distribution is constant in the entire laser beam, the entire zone magnified by the optic applies the same temperature on the localized zone or localized zones. This allows using optics of different shapes, for example 8 mm x 10 mm, 8 mm x 20 mm, 15 mm x 30 mm rectangles, etc.

Therefore, the localized zone or zones Z irradiated with the laser can be irradiated according to different distribution patterns, like those shown by way of example in Figures 4, 5, 6 and 7, and according to the format of the laser beam used (see Figure 3).

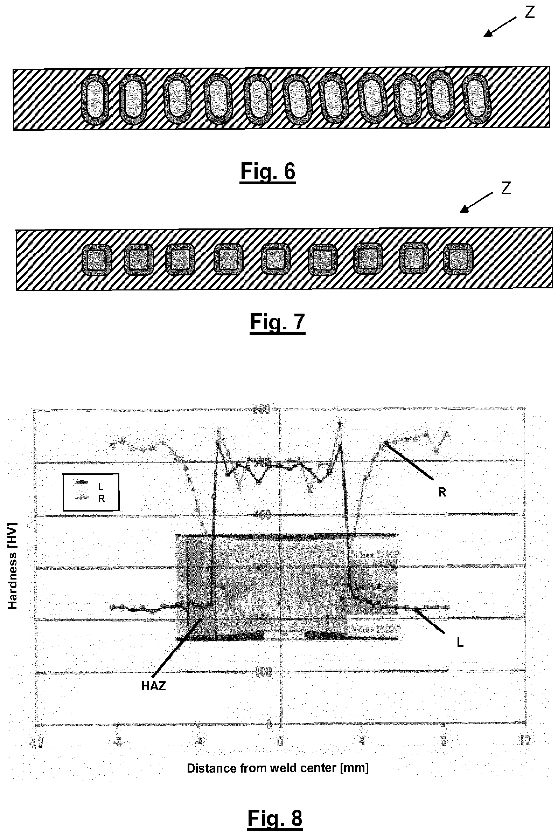

Figure 8 shows the hardness results (Vickers) obtained after having applied the method of the invention for the manufacture of a structural component formed by two parts connected by spot welding in a localized zone Z of the first part, which has been selectively subjected, after the formation of the first part, to a subsequent heat treatment by means of a high power diode laser beam followed by a cooling step to change its microstructure. The results of said method are those corresponding to graph L, with a darker line, while the other reference graph, graph R, corresponds to the hardness results of a structural component formed by two parts connected by spot welding in a localized zone Z of one of them which has not been subjected to the mentioned heat treatment. Both graphs belong to a cross-section of the respective structural component in the spot welding connection zone, made of USIBOR^{®} 1500P steel.

By comparing both graphs, it is observed that the hardness of the heat affected zone (HAZ) due to the spot weld of the structural component which has not been treated (graph R) radically decreases, while the structural component that has been treated (graph L) does not have this problem. For example, in the zone of the structural component not treated where the spot weld has been performed, the hardness decreases approximately from 480 HV to 330 HV, while in the graph of the structural component according to the invention, no considerable variations are observed, the hardness in the heat affected zone (HAZ) being maintained at about 225 HV.

Specifically, the localized zone Z of the first part of the structural component the hardness values of which are those shown in graph R of Figure 8 was irradiated with a diode laser beam of a power comprised between 1 and 4 kW, the irradiated surface being 100 cm² and having a laser format in the form of dots with a surface between 800 and 1000 mm² approximately. The temperature of the laser during irradiation was comprised between 600 °C and 800 °C, and the component was then left to cool at room temperature.

Figure 9 partially shows two structural components each formed by two USIBOR^{®} 1500P steel parts with a silicon and aluminium-based coating, connected by spot welding. The structural component on the right, particularly the zone of the first part B where it was spot welded, was subjected before said welding to the same treatment as that described in the preceding paragraph, unlike the zone of the first part A of the structural component on the left. Both components were subjected to a tensile test until breakage, which consists of applying a tensile force on the second part of each structural component until breakage of the structural components. As can be seen in Figure 9, the breakage of the component on the left started in the heat affected zone (HAZ) of the spot weld, while said heat affected zone (HAZ) in the component on the right remained intact.

## Claims

1. A structural component of a vehicle, comprising a first part and a second part,
the first part obtained from an ultra-high strength (UHSS) steel plate with a protective aluminium-silicon coating, of a thickness comprised between 1 and 3 mm and which has been subjected to a prior hot stamping formation operation, **characterized in that**
the first part comprises at least one localized zone which has been selectively subjected, after the hot stamping formation of the first part, to a heat treatment by a high power diode laser beam followed by a cooling step to change its microstructure, and thereby providing said localized zone with a martensite content intentionally less than that of the rest of the part,
spot welding the localized zone of the first part to the second part,
the second part having been obtained from hot stamping a high strength (HSS) or ultra high strength steel (UHSS) plate.

2. The component according to claim 1, wherein the microstructure of the localized zone is mostly or entirely made up of ferrite, perlite, tempered martensite or a mixture thereof.

3. The component according to any of claims 1 - 2, **characterized in that** the plate from which the first part of the finished component is obtained is a boron steel plate and **in that** the tensile strength of the boron steel plate measured after hot forming is comprised between 1200 MPa and 1600 MPa.

4. The component according to any of claims 1-3, wherein the first part is an upright between the front door and the glass plate.

5. A method for the manufacture of a structural component of a vehicle starting from an ultra-high strength (UHSS) steel plate or sheet with a protective aluminium-silicon coating and of a thickness comprised between 1 and 3 mm, comprising
subjecting the plate to a hot stamping formation operation to form a first part,
subsequently subjecting at least one localized and previously selected zone of the first part to a heat treatment, by irradiating it with a diode laser beam of a power comprised between 500 W and 6 kW until reaching a temperature comprised between 400 °C and 900 °C, and
cooling the first part in order to change its microstructure, thereby providing said localized zone with an intentionally lower martensite content and accordingly with a lower yield strength and greater elongation in comparison with those of its adjacent zones not subjected to said heat treatment; and
connecting a second part to the first part by spot welding in the localized zone of the first part.

6. The method according to claim 5, **characterized in that** after having been subjected to the subsequent heat treatment in the localized zone, the first part is left to cool at room temperature.

7. The method according to claim 5, wherein the first part after having been subjected to the subsequent heat treatment is subjected to a controlled cooling operation in which the cooling rate is equal to or less than 10 °C/s.

8. The method according to any of claims -5 - 7, wherein the subsequent heat treatment in the localized zone of the first part is done by marking out a predetermined figure thereon by means of a diode laser beam, the rate of advance of the laser beam being from 4 to 20 mm/s.

9. The method according to any of claims -5 - 8, comprising the operation of irradiating one and the same localized zone, or at least part of it, more than once with the diode laser beam.

10. The method according to any of claims 5 - 9, wherein the microstructure of the localized zone after the subsequent heat treatment is mostly or entirely made up of ferrite, perlite, tempered martensite or a mixture of any of the foregoing.

11. The method according to any of claims 5 - 10, wherein a tensile strength of the localized zone of the first part of the finished component has a value between 30% and 50% of the tensile strength measured after hot forming and prior to being subjected to the heat treatment by means of the diode laser beam and wherein the second part has been obtained from hot stamping a high strength (HSS) or ultra high strength steel (UHSS) plate.

## Patentansprüche

1. Strukturbauteil eines Fahrzeugs, bestehend aus einem ersten Teil und einem zweiten Teil,
das erste Teil, das aus einem ultrahochfesten (UHSS) Stahlblech mit einer Aluminium-Silizium-Schutzbeschichtung mit einer Dicke zwischen 1 und 3 mm hergestellt ist und das zuvor einem Warmumformungsvorgang unterzogen wurde, **dadurch gekennzeichnet, dass**
das erste Teil mindestens eine lokalisierte Zone aufweist, die nach der Warmumformung des ersten Teils selektiv einer Wärmebehandlung durch einen Hochleistungsdiodenlaserstrahl gefolgt von einem Abkühlungsschritt unterzogen wurde, um ihre Mikrostruktur zu verändern und dadurch die lokalisierte Zone mit einem Martensitgehalt zu versehen, der absichtlich geringer ist als der des restlichen Teils,
Punktschweißen der lokalisierten Zone des ersten Teils an das zweite Teil,
das zweite Teil wurde durch Warmpressen einer hochfesten (HSS) oder ultrahochfesten (UHSS) Stahlplatte hergestellt.

2. Bauteil nach Anspruch 1, wobei das Gefüge der lokalisierten Zone überwiegend oder vollständig aus Ferrit, Perlit, getempertem Martensit oder einer Mischung davon besteht.

3. Bauteil nach einem der Ansprüche 1 bis 2, **dadurch gekennzeichnet, dass** das Blech, aus dem der erste Teil des fertigen Bauteils gewonnen wird, ein Borstahlblech ist und dass die Zugfestigkeit des Borstahlblechs, gemessen nach der Warmumformung, zwischen 1200 MPa und 1600 MPa liegt.

4. Bauteil nach einem der Ansprüche 1 bis 3, **dadurch gekennzeichnet, dass** der erste Teil ein Pfosten zwischen der Fronttür und der Glasplatte ist.

5. Verfahren zur Herstellung eines Strukturbauteils eines Fahrzeugs ausgehend von einer ultrahochfesten (UHSS) Stahlplatte oder einem ultrahochfesten Stahlblech mit einer Aluminium-Silizium-Schutzschicht und einer Dicke zwischen 1 und 3 mm, umfassend
Unterziehen der Platte einem Heißprägevorgang, um ein erstes Teil zu formen,
anschließend mindestens eine lokalisierte und zuvor ausgewählte Zone des ersten Teils einer Wärmebehandlung unterzogen wird, indem sie mit einem Diodenlaserstrahl mit einer Leistung zwischen 500 W und 6 kW bestrahlt wird, bis eine Temperatur zwischen 400 °C und 900 °C erreicht ist, und
Abkühlung des ersten Teils, um seine Mikrostruktur zu verändern, wodurch die lokalisierte Zone mit einem absichtlich niedrigeren Martensitgehalt und dementsprechend mit einer niedrigeren Streckgrenze und einer größeren Dehnung im Vergleich zu denjenigen ihrer benachbarten Zonen, die nicht der Wärmebehandlung unterzogen wurden, versehen wird; und
Verbindung eines zweiten Teils mit dem ersten Teil durch Punktschweißen in der lokalisierten Zone des ersten Teils.

6. Verfahren nach Anspruch 5, **dadurch gekennzeichnet, dass** man das erste Teil nach der nachfolgenden Wärmebehandlung in der lokalisierten Zone bei Raumtemperatur abkühlen lässt.

7. Verfahren nach Anspruch 5, wobei das erste Teil nach der anschließenden Wärmebehandlung einer kontrollierten Abkühlung unterzogen wird, bei der die Abkühlungsgeschwindigkeit gleich oder kleiner als 10 °C/s ist.

8. Verfahren nach einem der Ansprüche 5 bis 7, wobei die nachfolgende Wärmebehandlung in der lokalisierten Zone des ersten Teils durch Markierung einer vorbestimmten Figur darauf mittels eines Diodenlaserstrahls erfolgt, wobei die Vorschubgeschwindigkeit des Laserstrahls 4 bis 20 mm/s beträgt.

9. Verfahren nach einem der Ansprüche 5 bis 8, bei dem ein und derselbe lokalisierte Bereich oder zumindest ein Teil desselben mehr als einmal mit dem Diodenlaserstrahl bestrahlt wird.

10. Verfahren nach einem der Ansprüche 5 bis 9, wobei das Gefüge der lokalisierten Zone nach der anschließenden Wärmebehandlung überwiegend oder vollständig aus Ferrit, Perlit, vergütetem Martensit oder einem Gemisch aus einem der vorgenannten Stoffe aufgebaut ist.

11. Verfahren nach einem der Ansprüche 5 bis 10, wobei die Zugfestigkeit der lokalisierten Zone des ersten Teils des fertigen Bauteils einen Wert zwischen 30 % und 50 % der Zugfestigkeit aufweist, die nach der Warmumformung und vor der Wärmebehandlung mit dem Diodenlaserstrahl gemessen wurde.

## Revendications

1. Un composant structurel d'un véhicule, comprenant une première pièce et une seconde pièce,
la première pièce obtenue à partir d'une tôle d'acier à ultra-haute résistance (UHSS) avec un revêtement protecteur en aluminium-silicium, d'une épaisseur comprise entre 1 et 3 mm et qui a été soumise à une opération préalable de formation par estampage à chaud, **caractérisée par le fait que**
la première pièce comprend au moins une zone localisée qui a été sélectivement soumise, après la formation de la première pièce par estampage à chaud, à un traitement thermique par un faisceau laser à diode de haute puissance suivi d'une étape de refroidissement pour modifier sa microstructure, et ainsi conférer à ladite zone localisée une teneur en martensite intentionnellement inférieure à celle du reste de la pièce,
soudage par points de la zone localisée de la première pièce à la seconde pièce,
la seconde pièce a été obtenue par estampage à chaud d'une plaque d'acier à haute résistance (HSS) ou à ultra haute résistance (UHSS).

2. Composant selon la revendication 1, dans lequel la microstructure de la zone localisée est principalement ou entièrement constituée de ferrite, de perlite, de martensite tempérée ou d'un mélange de ces éléments.

3. Le composant selon l'une des revendications 1 - 2, **caractérisé par le fait que** la plaque à partir de laquelle la première pièce du composant fini est obtenue est une plaque d'acier au bore et **par le fait que** la résistance à la traction de la plaque d'acier au bore mesurée après formage à chaud est comprise entre 1200 MPa et 1600 MPa .

4. Le composant selon l'une des revendications 1 à 3, dans lequel la première pièce est un montant entre la porte avant et la plaque de verre.

5. Procédé de fabrication d'un composant structurel d'un véhicule à partir d'une plaque ou d'une feuille d'acier à ultra-haute résistance (UHSS) revêtue d'une couche protectrice d'aluminium-silicium et d'une épaisseur comprise entre 1 et 3 mm, comprenant
soumettre la plaque à une opération de formation par estampage à chaud pour former une première pièce,
soumettre ensuite au moins une zone localisée et préalablement sélectionnée de la première pièce à un traitement thermique, en l'irradiant avec un faisceau laser à diode d'une puissance comprise entre 500 W et 6 kW jusqu'à ce qu'elle atteigne une température comprise entre 400 °C et 900 °C, et
refroidir la première pièce afin de modifier sa microstructure, ce qui confère à ladite zone localisée une teneur en martensite volontairement plus faible et, par conséquent, une limite d'élasticité plus faible et un allongement plus important par rapport à ceux de ses zones adjacentes qui n'ont pas été soumises audit traitement thermique ; et
raccorder une deuxième pièce à la première pièce par soudage par points dans la zone localisée de la première pièce.

6. Procédé selon la revendication 5, **caractérisé par le fait qu'**après avoir été soumise au traitement thermique ultérieur dans la zone localisée, la première pièce est laissée à refroidir à température ambiante.

7. Procédé selon la revendication 5, dans lequel la première pièce, après avoir subi le traitement thermique ultérieur, est soumise à une opération de refroidissement contrôlé dans laquelle la vitesse de refroidissement est égale ou inférieure à 10 °C/s.

8. Procédé selon l'une des revendications 5 à 7, dans lequel le traitement thermique ultérieur dans la zone localisée de la première pièce est effectué par le marquage d'une figure prédéterminée au moyen d'un faisceau laser à diode, la vitesse d'avancement du faisceau laser étant comprise entre 4 et 20 mm/s.

9. Procédé selon l'une des revendications 5 à 8, comprenant l'opération d'irradier une seule et même zone localisée, ou au moins une partie de celle-ci, plus d'une fois avec le faisceau laser à diode.

10. Procédé selon l'une des revendications 5 à 9, dans lequel la microstructure de la zone localisée après le traitement thermique ultérieur est principalement ou entièrement constituée de ferrite, de perlite, de martensite trempée ou d'un mélange de l'un des éléments précédents.

11. Procédé selon l'une des revendications 5 à 10, dans laquelle la résistance à la traction de la zone localisée de la première pièce du composant fini a une valeur comprise entre 30 % et 50 % de la résistance à la traction mesurée après le formage à chaud et avant d'être soumise au traitement thermique au moyen du faisceau laser à diode.
